# EUROPEAN PATENT APPLICATION

(11) **EP 2 921 252 A1**
(43) Date of publication of application: **23.09.2015**
(21) Application number: 14160610.3
(22) Date of filing: 18.03.2014
(51) Int. Cl.: B23K 35/36, B23K 1/20, B23K 35/362

(54) **Welding flux and welding method**

(71) Applicant: Solvay SA, 1120 Bruxelles (BE)
(72) Inventor: SESEKE-KOYRO, Ulrich, 30916 ISERNHAGEN (DE); BECKER, Andreas, 29331 LACHEND (DE)
(74) Representative: Mross, Stefan P.M.

(57) **Abstract**

A flux is provided which comprises CaF₂, MgF₂ and Li₃AlF₆, and which contains additionally at least one fluoride selected from the group consisting of SrF₂ and BaF₂.

The flux or a flux composition which comprises the flux and certain additives, e.g. a liquid carrier and/or a binder, is especially suitable to be used in a method for welding parts of aluminum or aluminum alloy, especially using a fuel/oxygen flame to provide heat. A preferred fuel is acetylene.

## Description

The invention concerns a flux which is for welding of parts of aluminum or of aluminum alloys and a method of welding.

Parts of aluminum or parts of aluminum alloys, e.g. aluminum alloys containing magnesium, are used, for example, for the construction of machinery like vehicles. To joint such parts, the parts are assembled. A flux may be applied and the parts to be joint are, preferably, locally heated to melt a part of the aluminum or the alloy to obtain a stable joint. The heat can be applied, for example, by irradiation with a laser light, by applying electric energy, e.g. in the form of a light arc, or by using an oxygen acetylene flame to provide heat. The latter method can be supported by a wire providing solder metal, often being aluminum.

A flux is known which is suitab le for oxyacetylene welding of aluminum which flux comprises CaF₂, MgF₂, BaF₂ and LiF. LiF is considered as hazardous.

Object of the present invention is to provide a flux having a content of LiF which is lower than in known fluxes, and preferably, to provide a flux which is essentially free of LiF suitable for welding of aluminum or aluminum alloys to aluminum or aluminum alloys. Another object of the present invention is to provide a method for welding of aluminum or aluminum alloys to aluminum or aluminum alloys, especiallyfor application using an oxygen acetylene flame. These and other objects are provided by the flux and the method as outlined herebelow.

A first aspect of the present invention relates to a flux which is suitable for welding of aluminum or aluminum alloys to aluminum or aluminum alloys.

The flux of the present invention comprises CaF₂, MgF₂ and Li₃AlF₆, and it further comprises at least one fluoride selected from the group consisting of SrF₂ and BaF₂, and optionally LiF, with the proviso that, if LiF is comprised, the weight ratio between LiF and Li₃AlF₆ is in a range of from 1:1 to 1:99.

If LiF is comprised, the weight ratio between LiF and Li₃AlF₆ is preferably in a range of from 1:3 to 1:99, and most preferably, in a range of from 1:9 to 1:99.

While the flux may contain both SrF₂ and BaF₂ it is preferred that it contains only BaF₂.

The flux is especially suitable for autogenous welding of aluminum parts or aluminum alloy parts to aluminum parts or aluminum alloy parts using a mixture of oxygen or air and a flammable gas, especially an oxygen acetylene (also denoted as oxy acetylene) flame, to provide heat, and using a wire to provide solder metal, especially using an aluminum wire. But the flux may also be used for laser welding or arc welding of said parts.

The term "comprising" and "containing" include the meaning of "consisting of'.

Preferably, the flux is essentially free of LiF. The term "essentially free" preferably denotes a content of LiF which is equal to or lower than 0.5 % by weight, and more preferably, is equal to or lower than 0.2 % by weight. Especially preferably, the content of LiF is equal to or lower than 0.1 % by weight, including 0 % by weight. Any percentages relating to the content of CaF₂, MgF₂, Li₃AlF₆, LiF and SrF₂ relate to the total weight of the dry flux.

In one embodiment, the flux comprises CaF₂, MgF₂, Li₃AlF₆, and SrF₂. The flux, in this embodiment, contains no BaF₂. SrF₂ provides a red light during brazing which, from some users, may not be appreciated.

In another embodiment, the flux comprises CaF₂, MgF₂, Li₃AlF₆, and BaF₂.

Preferably, the content of CaF₂ in the flux is in a range of from 5 to 20 % by weight.

Preferably, the content of MgF₂ is in a range of from 15 to 30 % by weight.

Preferably, the content of Li₃AlF₆ is in a range of from 30 to 60 % by weight. If LiF is contained, then the sum of LiF and Li₃AlF₆ is preferably in a range of from 30 to 60 % by weight.

Preferably, the content of SrF₂ if no BaF₂ is present, or of BaF₂ if no SrF₂ is present, or, if both are present, the content of the sum of SrF₂ or BaF₂ is in a range of from 15 to 35 % by weight.

Preferably, BaF₂ is present, and the content of BaF₂ is equal to or lower than 28 % by weight.

A preferred flux comprises 5 to 20 % by weight of CaF₂, 15 to 30 % by weight of MgF₂, 30 to 60 % by weight of Li₃AlF₆ and 15 to 35 % by weight of BaF₂. A more preferred flux comprises 5 to 20 % by weight of CaF₂, 15 to 30 % by weight of MgF₂, 30 to 60 % by weight of Li₃AlF₆ and 15 to 28 % by weight of BaF₂. Preferably, the LiF content of these preferred fluxes is equal to or lower than 0.5 % by weight, more preferably, equal to or lower than 0.2 % by weight, and especially preferably, the flux is essentially free of LiF. In certain embodiments, the fluxes consist of said fluorides. In other embodiments, the fluxes consist of said fluorides and are essentially free of LiF.

Preferably, the flux is in the form of a powder. The particle size is variable.

Preferably, the particles have a diameter such that 99 % or more of the particles have a diameter of equal to or lower than 100 µm, preferably of equal to or lower than 50 µm.

The flux may be applied as such onto parts to be joined, e.g. by pneumatic transport and electrostatic forces.

Alternatively, the flux may be applied in the form of a composition which comprises additives providing useful properties in methods of using the flux.

If it is intended to apply the flux in the form of a flux composition, the composition preferably comprises the flux and at least one liquid carrier and/ or at least one binder. The liquid carrier allows a wet application of the flux. The binder increases the viscosity of a wet flux composition and the adhesion of a dry flux composition to the parts.

In one embodiment, the flux composition of the present invention comprises the flux and any additive, if present, being dispersed in an organic carrier to form a flux slurry. The organic carrier is e.g. a monobasic alcohol, for example, ethanol or isopropanol, or a dibasic alcohol, for example, glycol. The disadvantage of organic carriers is the flammability unless the flux composition is dried after application on the parts.

Thus, preferably, the carrier is water or an aqueous composition and more preferably, water. The term "aqueous composition" denoted mixtures of water and organic liquids miscible with water, e.g., alcohols or ketones.

Preferably, the flux composition is an aqueous slurry, a paste based on an aqueous carrier or a flux composition comprising a binder, especially for pre-fluxing.

The flux of the present invention is contained in the composition in an amount equal to or greater than 20 % by weight, preferably equal to or greater than 30 % by weight of the total flux composition. Preferably, the content of the flux of the present invention in the flux composition is equal to or lower than 70 % by weight of the total flux composition.

According to one embodiment, the flux composition is an aqueous composition in the form of a suspension comprising or consisting of a flux, water and a binder. This flux composition can be used for any wet application of the flux, and preferably, it is used for pre-fluxing. In this flux composition, the flux of the present invention is preferably contained in an amount equal to greater than 20 % by weight of the total weight of the flux composition. Preferably, the content of the flux is equal to or lower than 50 % by weight of the total flux composition. The binder is preferably contained in an amount of equal to or greater than 0.1 % by weight, more preferably, 1 % by weight of the total flux composition. Preferably, the content of binder is equal to or lower than 30 % by weight, preferably equal to or lower than 25 % by weight, of the total flux composition. The balance to 100 % by weight is an aqueous carrier consisting of water or containing water and a water-miscible organic liquid as defined above. Preferably, the aqueous carrier consists essentially of water also in this embodiment.

The flux composition may comprise the flux, water, a binder, a thickener and optionally additives which facilitate the brazing process or improve the brazed parts. The thickener may also provide the flux composition with thixotropic properties. A wax as described in EP-A 1808264, methyl butyl ether, gelatine, pectine, acrylates or polyurethane, as described in EP-A-1 287941, are preferred thickeners if a thickener is applied.

Preferably, the flux preparation does not contain a thickener.

The flux composition may include other additives, for example, suspension stabilizers, surfactants, especially nonionic surfactants, e.g. Antarox^{®} BL 225, a mixture of linear C8 to C10 ethoxylated and propoxylated alcohols.

Preferred binders are selected from the group consisting of organic polymers. Such polymers are physically drying (i.e., they form a solid coating after the liquid is removed), or they are chemically drying (they may form a solid coating e.g. under the influence of chemicals, e.g. oxygen or light which causes a cross linking of the molecules), or both. Preferred organic polymers are selected from the group consisting of polyolefines, e.g. butyl rubbers, polyurethanes, resins, phthalates, polyacrylates, polymethacrylates, vinyl resins, epoxy resins, nitrocellulose, polyvinyl acetates and polyvinyl alcohols. The binder can be water-soluble or water-insoluble. The binder preferably is dispersed in the carrier. Polyacrylates, polymethacrylates, polyvinyl alcohols and polyurethanes are preferred binders in the present flux composition.

A further aspect of the present invention relates to a method for welding of parts of aluminum or aluminum alloys to parts of aluminum or aluminum alloys.

The method of the present invention for joining parts from aluminum or from aluminum alloys wherein at least one part of the parts to be joined contains the flux of the invention or the flux composition of the invention, the method comprising at least one step of assembling the parts to be joined, and at least one step of welding the parts to form a joined assembly of parts applying chemical energy, electric energy or laser energy.

The flux or flux composition may be present as a coating on all the surface of the part or on selected areas of the part, preferably close to the area where the parts are to be joined. The flux may be applied in a dry method, e.g. it can be applied electrostatically or by pouring the dry powder to the the respective area.

Alternatively, the flux composition may be applied, e.g. in a wet method, e.g. it may be sprayed onto the parts, painted on the parts, or be applied by immersing the parts into the composition which usually contains the fluorides in the form of a slurry. Often, after being applied in a wet method, the parts will be dried, especially if the liquid carrier is or contains an organic liquid.

If not yet assembled, the parts to be joined are assembled and then are welded.

The term "chemical energy" preferably denotes energy provided by burning a flammable gas (or fuel gas), e.g. hydrogen, petrol, methane, low pressure gas ("LPG") or natural gas, using oxygen or air.

Preferably, energy is introduced to the preassembled parts by means of an oxyygen acetylene flame. An oxygen acetylene torch kit usually comprises cylinders for oxygen and acetylene, a flash back arrestor or a non return valve (or both), flexible hoses for feeding oxygen and acetylene via pressure regulators to a mixer, and a welding torch. The gas mixture leaving the torch is ignited and provides heat.

Often, an aluminum wire is provided, preferably through the torch, as solder metal to the parts to be joined.

The method is, for example, suitable to join car parts, gutters, tubes or sheets made from aluminum or aöuminum alloys.

The preferred method of joining the parts is the autogenous welding type.

The advantage of the flux, the flux composition and the welding process using the flux or flux composition is that less LiF or even no LiF is needed or contained in the flux anymore. The content in BaF₂ may be lower than used in prior art methods.

Should the disclosure of any patents, patent applications, and publications which are incorporated herein by reference conflict with the description of the present application to the extent that it may render a term unclear, the present description shall take precedence.

The following examples are intended to explain the invention in detail without limiting it.

### Example 1 : Manufacture of the flux

### Example 1.1: Flux containing SrF₂

All fluoridic constituents were provided in the form of powder.

8.4 g SrF₂, 9.3 g MgF₂, 5.7 g CaF₂ and 17.5 g Li₃AlF₆ were introduced into a mortar and mixed to provide the flux.

### Example 1.2 : Flux containing BaF₂

All fluoridic constituents were provided in the form of powder.

10.8 g BaF₂, 9.6 g MgF₂, 6.0 g CaF₂ and 17.8 g Li₃AlF₆ were introduced into a mortar and mixed to provide the flux.

### Example 2 : Manufacture of a flux composition

### Example 2.1 : A flux composition containing SrF₂

Sodium polyacrylate is dissolved in water to provide a concentration of 5 % by weight. 20 ml of this solution is mixed with 10 g of the flux of example 1.1 to provide a flux slurry.

### Example 2.2 : A flux composition containing SrF₂

Sodium polyacrylate is dissolved in water to provide a concentration of 5 % by weight. 20 ml of this solution is mixed with 10 g of the flux of example 1.1 to provide a flux slurry.

### Example 3 : Welding of Al parts

### Example 3.1 : Welding with a flux containing SrF₂

Welding was performed using an oxy acetylene torch under feeding of an Al wire to provide solder to the joint.

Two aluminum sheets were assembled, and the flux of example 1.1 was spread as a dry powder to the area near the intended joint. An oxy acetylene gas mixture was ignited to provide heat to the respective areas of the Al sheets. The sheets were welded. From some welders, the red flash emitted from the hot metal and the flux (caused by vaporized strontium compounds) was perceived as unpleasant.

### Example 3.2 : Welding with a flux containing BaF₂

Welding was performed using an oxy acetylene torch under feeding of an Al wire to provide solder to the joint.

Two aluminum sheets were assembled, and the flux of example 1.2 was spread as a dry powder to the area near the intended joint. An oxy acetylene gas mixture was ignited to provide heat to the respective areas of the Al sheets. The sheets were welded.

### Example 4 : Welding of Al parts using a flux composition

### Example 4.1 : Welding with a flux composition containing SrF₂

Welding is performed using an oxy acetylene torch under feeding of an Al wire to provide solder to the joint.

Two aluminum sheets are assembled, and the flux composition of example 2.1 is sprayed to the area near the intended joint. The parts are then dried. An oxy acetylene gas mixture is ignited to provide heat to the respective areas of the Al sheets. The sheets are welded. The red flash emitted from the hot metal and the flux (caused by vaporized strontium compounds) will be perceived as unpleasant from some welders.

### Example 3.2 : Welding with a flux composition containing BaF₂

Welding is performed using an oxy acetylene torch under feeding of an Al wire to provide solder to the joint.

Two aluminum sheets are assembled, and the flux of example 1.2 is spread as a dry powder to the area near the intended joint. An oxy acetylene gas mixture is ignited to provide heat to the respective areas of the Al sheets. The sheets are welded.

## Claims

1. A flux comprising CaF₂, MgF₂ and Li₃AlF₆, further comprising at least one fluoride selected from the group consisting of SrF₂ and BaF₂ and optionally LiF, with the proviso that, if LiF is comprised, the weight ratio between LiF and Li₃AlF₆ is in a range of from 1:1 to 1:99.

2. The flux of claim 1 comprising CaF₂, MgF₂, Li₃AlF₆, and SrF₂.

3. The flux of claim 1 comprising CaF₂, MgF₂, Li₃AlF₆, and BaF₂.

4. The flux of anyone of claims 1 to 3 which is essentially free of LiF.

5. The flux of anyone of claims 1 to 4 wherein the content of CaF₂ is in a range of from 5 to 20 % by weight.

6. The flux of anyone of claims 1 to 5 wherein the content of MgF₂ is in a range of from 15 to 30 % by weight.

7. The flux of anyone of claims 1 to 6 wherein the content of L1₃AlF₆ is in a range of from 30 to 60 % by weight.

8. The flux of anyone of claims 1 to 7 wherein the content of SrF₂ or BaF₂ or, if both are present, the content of the sum of SrF₂ or BaF₂ is in a range of from 15 to 35 % by weight.

9. The flux of claim 8 wherein BaF₂ is present, and wherein the content of BaF₂ is equal to or lower than 28 % by weight.

10. The flux of anyone of claims 1 to 9 which is in the form of a powder.

11. A flux composition comprising the flux of anyone of claims 1 to 10 and at least one liquid carrier and/ or at least one binder.

12. A method for joining parts from aluminum or from aluminum alloys wherein at least one part of the parts to be joined comprises the flux of claims 1 to 10 or the flux composition of claim 1, comprising at least one step of assembling the parts to be joined, and at least one step of welding the parts to form a joined assembly of parts applying chemical energy, electric energy or laser energy.

13. The method of claim 12 wherein the chemical energy is introduced by means of an oxygen acetylene flame.

14. The method of claims 12 or 13 wherein an aluminum wire is provided as solder metal to the parts to be joined.

15. The method of anyone of claims 12 to 14 which is an autogenous welding method.
